# EUROPÄISCHE PATENTSCHRIFT

(11) **EP 3 699 134 B1**
(45) Veröffentlichungstag und Bekanntmachung des Hinweises auf die Patenterteilung: **07.06.2023**
(21) Anmeldenummer: 20158900.9
(22) Anmeldetag: 21.02.2020
(51) Int. Cl.: B66C 1/02

(54) **HALTEKOPF FÜR EINE VAKUUM-HALTEVORRICHTUNG ZUR HANDHABUNG EINES PLATTENFÖRMIGEN WERKSTÜCKS UND ENTSPRECHENDE VAKUUM-HALTEVORRICHTUNG**
HOLDING HEAD FOR A VACUUM HOLDING DEVICE FOR HANDLING A PANEL-SHAPED WORKPIECE AND CORRESPONDING VACUUM HOLDING DEVICE
TÊTE DE MAINTIEN POUR UN DISPOSITIF DE MAINTIEN SOUS VIDE PERMETTANT DE MANIPULER UNE PIÈCE EN FORME DE PLAQUE ET DISPOSITIF DE MAINTIEN SOUS VIDE CORRESPONDANT

(30) Priorität: 22.02.2019 DE 102019104590
(43) Veröffentlichungstag der Anmeldung: 26.08.2020
(73) Patentinhaber: Bohle AG, 42781 Haan (DE)
(72) Erfinder: THEIßEN, Marco, 42929 Wermelskirchen (DE); HÖHN, Edgar, 42781 Haan (DE)
(74) Vertreter: Michalski Hüttermann & Partner Patentanwälte mbB

(56) Entgegenhaltungen:
- EP-A2- 1 314 836
- CN-U- 205 472 213
- DE-A1- 4 244 047
- JP-A- 2000 007 147

## Beschreibung

Die Erfindung betrifft einen Haltekopf für eine Vakuum-Haltevorrichtung zur Handhabung eines plattenförmigen Werkstücks, insbesondere einer Glasplatte, wobei der Haltekopf bezüglich einer Achse drehbar gelagert ist und einen Grundkörper mit einer die Achse umgebenden Anordnung von Bedienelementen eines Steuerungssystems zur Steuerung eines Vakuumsystems der Vakuum-Haltevorrichtung sowie mindestens ein am Grundkörper direkt oder indirekt gelagertes Vakuum-Halteelement zum Halten des plattenförmigen Werkstücks aufweist.

Die Erfindung betrifft weiterhin eine entsprechende Vakuum-Haltevorrichtung zur Handhabung eines plattenförmigen Werkstücks.

Vakuum-Haltevorrichtungen zur Handhabung eines plattenförmigen Werkstücks sind als Vakuumhebegeräte (kurz: Vakuumheber) bekannt. Sie eignen sich zur Handhabung von großen und flächigen, größtenteils saugdichten Werkstücken, wie zum Beispiel: zur Handhabung und Positionierung von Glasscheiben und Fenstern bei der Produktion, Rahmung und Montage, zum Be- und Entladen von CNC-Laserschneidmaschinen mit Blechtafeln oder zum Be- und Entladen von CNC-Bearbeitungsmaschinen mit Holz- oder Kunststoffplatten.

Es gibt diverse Sicherheitsanforderungen an derartige Vakuumhebegeräte. Diese ergeben sich beispielsweise aus der europäischen Norm EN 13155:2003 (Krane - Sicherheit - Lose Lastaufnahmemitte). Im Kapitel 5 werden die Sicherheitsanforderungen bzw. Sicherheitsmaßnahmen aufgeführt. Unter dem Punkt 5.2.2 in der Norm sind "besondere Anforderungen an Vakuumhebegeräte" aufgeführt. Bei dem Unterpunkt 5.2.2.9 ist die folgende Anforderung beschrieben: "Das Lösen der Last muss über eine Steuerung mit Zweifachbetätigung erfolgen. Dies ist nicht erforderlich, wenn das Lösen der Last vor dem Absetzen der Last nicht möglich ist oder in abgesicherten Bereichen."

Bei der Handhabung von plattenförmigen Werkstücken, beispielsweise der Handhabung und Positionierung von Glasscheiben und Fenstern bei der Montage, sind möglichst viele Bewegungs-Freiheitsgrade gewünscht. Dabei sollte die Zweifachbetätigung jedoch bei möglichst jeder Position einfach durchzuführen sein.

Die Druckschrift EP 1 314 836 A2 zeigt einen Haltekopf einer Vakuum-Haltevorrichtung zur Handhabung einer Glasplatte, wobei der Haltekopf bezüglich einer Drehachse drehbar gelagert ist und einen Grundkörper mit einer die Drehachse umgebenden Anordnung von Bedienelementen eines Steuerungssystems zur Steuerung eines Vakuumsystems der Vakuum-Haltevorrichtung sowie mehrere am Grundkörper direkt oder indirekt gelagerte Vakuum-Halteelemente zum Halten der Glasplatte aufweist. Die drehbare Lagerung erfolgt über Lagerungsmittel, die Außerhalb von Drehachse und Anordnung der Bedienelemente angeordnet sind. Diese Die drehbare Lagerung ist recht aufwändig und lässt eine Erweiterung um weitere Bewegungs-Freiheitsgrade nur unter erhöhtem Aufwand zu.

Die Druckschrift JP 2000 007147 A zeigt eine Vakuum-Haltevorrichtung zur Handhabung eines plattenförmigen Werkstücks, insbesondere einer Glasplatte, mit einem Haltekopf, der bezüglich einer Achse drehbar gelagert ist und einen Grundkörper mit einer die Achse umgebenden Anordnung von Bedien- und Verriegelungselementen der Vakuum-Haltevorrichtung sowie mehrere am Grundkörper direkt oder indirekt gelagerte Vakuum-Halteelemente zum Halten des plattenförmigen Werkstücks aufweist. Eine ähnliche Vakuum-Haltevorrichtung zeigt die Druckschrift DE 42 44 047 A1.

Es ist Aufgabe der Erfindung Maßnahmen anzugeben, die ein bequemes Betätigen der vorgeschriebenen Steuerung mit Zweifachbetätigung bei drehbar gelagerten Halteköpfen ermöglicht.

Die Lösung der Aufgabe erfolgt erfindungsgemäß durch die Merkmale der unabhängigen Ansprüche. Vorteilhafte Ausgestaltungen der Erfindung sind in den Unteransprüchen angegeben.

Bei dem erfindungsgemäßen Haltekopf für eine Vakuum-Haltevorrichtung zur Handhabung eines plattenförmigen Werkstücks, welcher bezüglich einer Achse drehbar gelagert ist und einen Grundkörper mit einer die Achse umgebenden Anordnung von Bedienelementen eines Steuerungssystems zur Steuerung eines Vakuumsystems der Vakuum-Haltevorrichtung sowie mindestens ein am Grundkörper direkt oder indirekt gelagertes Vakuum-Halteelement zum Halten des plattenförmigen Werkstücks aufweist, ist vorgesehen, dass zumindest drei der Bedienelemente als Betätigungselemente in einer Zweifachbetätigungsschaltung zum Lösen des plattenförmigen Werkstücks verschaltet sind, wobei die ersten beiden der Betätigungselemente auf einander bezüglich der Position der Achse gegenüberliegenden Seiten der Anordnung angeordnet sind und das dritte Betätigungselement ringförmig ausgestaltet ist und die Achse umfänglich umgibt. Durch diese Ausgestaltung und Anordnung der Betätigungselemente ist es möglich, die Zweifachbetätigungsschaltung bei jeder Winkelposition des Haltekopfs problemlos zu bedienen, denn selbst wenn der Haltekopf achsnah gelagert ist, sollte immer mindestens eines der ersten beiden Betätigungselemente und mindestens ein Segment des dritten Betätigungselements zugänglich sein.

Besagte achsnahe Lagerung, also eine drehbare Lagerung, die im Bereich der Drehachse liegt, kann verhältnismäßig einfach um weitere Bewegungs-Freiheitsgrade erweitert werden.

Bei dem Haltekopf sind die Betätigungselemente insbesondere derart verschaltet, dass die Betätigung des ersten und/oder des zweiten Betätigungselements eine Sperrung des dritten Betätigungselements löst und dieses dritte Betätigungselement zur Betätigung freigibt. In der Regel ist für die lösbare Sperrung des dritten Betätigungselements eine Sperrmechanik vorgesehen. Das dritte Betätigungselement löst dann bei seiner Betätigung das "Lösen der Last" aus.

Gemäß einer vorteilhaften Ausgestaltung der Erfindung ist vorgesehen, dass das ringförmige dritte Betätigungselement durch Drehen betätigbar ist. Das Drehen erfolgt dabei insbesondere mit einer Drehbewegung entlang der Ringstruktur.

Gemäß einer weiteren vorteilhaften Ausgestaltung der Erfindung ist vorgesehen, dass das erste Betätigungselement, die Achse und das zweite Betätigungselement auf einer gedachten Gerade angeordnet sind. Dabei weist jedes der ersten beiden Betätigungselemente, also das erste und das zweite Betätigungselement, insbesondere den gleichen Abstand zur Achse auf. Mit anderen Worten weisen die ersten beiden Betätigungselemente bezüglich der Achse also eine Punktsymmetrie auf.

Bei dem Haltekopf ist insbesondere vorgesehen, dass das erste und/oder das zweite Betätigungselement als Druckschalter, insbesondere als Drucktaster, ausgebildet ist/sind. Derartige Schalter/Taster sind bewährte Standard-Betätigungselemente.

Gemäß einer vorteilhaften Ausführungsform des erfindungsgemäßen Haltekopfes ist vorgesehen, dass die ersten beiden Betätigungselemente außerhalb des ringförmigen dritten Betätigungselements angeordnet sind. Diese Anordnung der Betätigungselemente wird in einer Zweifachbetätigungsschaltung von vielen Bedienern/Nutzern favorisiert.

Bei der erfindungsgemäßen Vakuum-Haltevorrichtung zur Handhabung eines plattenförmigen Werkstücks, insbesondere einer Glasplatte, mit einem Vakuumsystem, einem Steuerungssystem zur Steuerung des Vakuumsystems und einem bezüglich einer Achse drehbar gelagerten Haltekopf ist vorgesehen, dass der Haltekopf als vorstehend genannter Haltekopf ausgebildet ist.

Gemäß einer vorteilhaften Ausführungsform der erfindungsgemäßen Vakuum-Haltevorrichtung ist vorgesehen, dass diese einen Arm aufweist, an dem der Haltekopf drehbar gelagert ist. Dabei ist insbesondere vorgesehen, dass der Haltekopf an dem Arm bezüglich mindestens einer weiteren Achse weiterhin auch verschwenkbar gelagert ist.

Bei der Anordnung der Bedienelemente auf dem Grundkörper des erfindungsgemäßen Haltekopfs (für die Vakuum-Haltevorrichtung zur Handhabung eines plattenförmigen Werkstücks) um die Achse herum, ist also vorgesehen, dass zumindest drei der Bedienelemente als Betätigungselemente in einer Zweifachbetätigungsschaltung zum Lösen des plattenförmigen Werkstücks verschaltet sind, wobei die ersten beiden der Betätigungselemente auf einander bezüglich der Position der Achse gegenüberliegenden Seiten der Anordnung angeordnet sind und das dritte Betätigungselement ringförmig ausgestaltet ist und die Achse umfänglich umgibt. Durch diese Ausgestaltung und Anordnung der Betätigungselemente ist es möglich, die Zweifachbetätigungsschaltung bei jeder Winkelposition des Haltekopfs problemlos zu bedienen, denn selbst wenn der Haltekopf achsnah gelagert ist.

Die im Zusammenhang mit dem Haltekopf genannten Ausgestaltungen der Erfindung, die sich auf die auf dem Grundkörper angeordneten Bedienelemente beziehen, sollen in gleicher Weise auch für die Anordnung dieser Bedienelemente auf dem Grundkörper des Haltekopfs gelten.

Nachfolgend wird die Erfindung unter Bezugnahme auf die anliegenden Zeichnungen anhand von bevorzugten Ausführungsbeispielen exemplarisch erläutert, wobei die nachfolgend dargestellten Merkmale sowohl jeweils einzeln als auch in Kombination einen Aspekt der Erfindung darstellen können. Es zeigen:
Fig. 1 eine Vakuum-Haltevorrichtung zur Handhabung eines plattenförmigen Werkstücks gemäß einer bevorzugten Ausführungsform der Erfindung und
Fig. 2 einen Grundkörper des Haltekopfs der Vakuum-Haltevorrichtung und die Anordnung von Bedienelementen auf diesem Grundkörper.

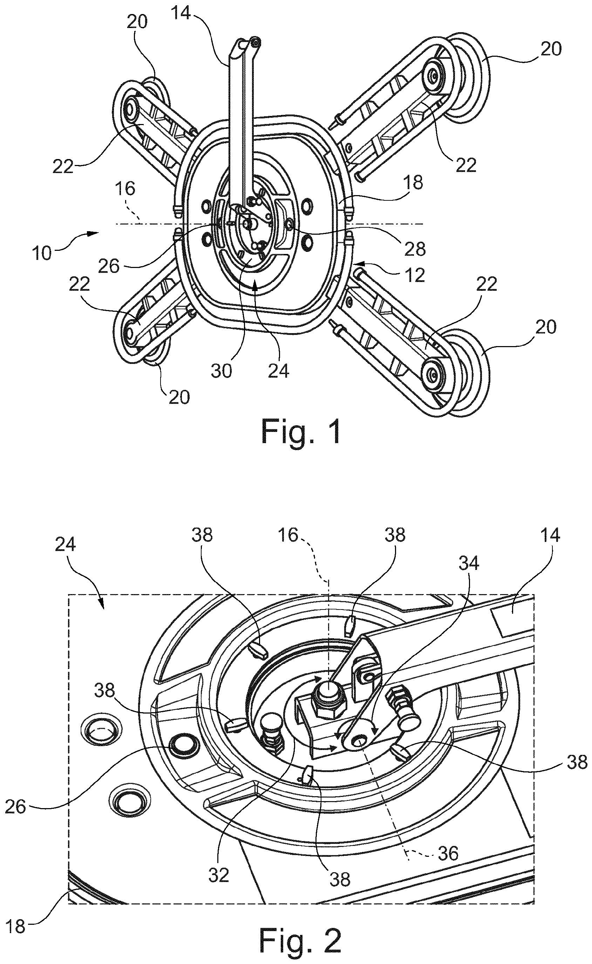

Die Fig. 1 zeigt ein Vakuum-Haltevorrichtung 10 zur Handhabung eines (nicht gezeigten) plattenförmigen Werkstücks wie zum Beispiel einer Glasplatte. Die Vakuum-Haltevorrichtung 10 umfasst Teile eines entsprechenden Vakuumsystems und eines Steuerungssystems zur Steuerung des Vakuumsystems sowie als mechanische Komponenten: einen Haltekopf 12 und einen den Haltekopf 12 tragenden Arm 14. Der sich im Wesentlichen in einer Ebene erstreckende Haltekopf 12 ist dabei so am Arm 14 gelagert, dass er sich um eine Achse 16 drehen lässt. Die Achse 16 geht dabei in der Mitte durch eine zentrale Komponente des Haltekopfes 12 - den Grundkörper 18 - und ist dabei senkrecht zu besagter Ebene ausgerichtet. Der Arm 14 kann beispielsweise an einem Kranhaken eines Krans angehängt werden.

Zusätzlich zu diesem Grundkörper 18 weist der Haltekopf 12 mehrere (im Beispiel vier) am Grundkörper 18 indirekt gelagerte Vakuum-Halteelemente 20 zum Halten des plattenförmigen Werkstücks auf. Dazu weist der Haltekopf 12 vier vom Grundkörper 18 ausgehend nach außen ragende Tragarme 22 auf, an deren freien Enden die Vakuum-Halteelemente 20 angeordnet sind. Die Vakuum-Bereiche dieser Vakuum-Halteelemente 20 sind alle auf einer Seite der Ebene angeordnet. In der Darstellung der Fig. 1 ist dies die Rückseite. Auf der Vorderseite des Grundkörpers 18 ist eine die Achse 16 umgebende Anordnung 24 von Bedienelementen 26, 28, 30 des Steuerungssystems zur Steuerung des besagten Vakuumsystems zu finden. Neben hier nicht weiter beschriebenen Bedienelementen sind dies die Betätigungselemente 26, 28, 30 einer Zweifachbetätigungsschaltung zum Lösen des plattenförmigen Werkstücks, also in dieser Schaltung verschaltete Betätigungselemente 26, 28, 30. Die Betätigungselemente 26, 28, 30 sind so angeordnet, dass die ersten beiden der Betätigungselemente 26, 28 auf einander bezüglich der Position der Achse 16 gegenüberliegenden Seiten bzw. Halbebenen der Anordnung 24 angeordnet sind und dass das ringförmig ausgestaltete dritte Betätigungselement 30 die Achse 16 umfänglich umgibt. Durch entsprechende Zweifach-Betätigung dieser Betätigungselemente 26, 28, 30 wird ein Belüften der Vakuum-Bereiche der Vakuum-Halteelemente 20 bewirkt.

Aufgrund einer Sicherheitsanforderung an derartige Vakuum-Haltevorrichtungen 10 (und auch anderer Vakuumhebegeräte) muss das Lösen der Last, also hier des plattenförmigen Werkstücks, über eine Steuerung mit Zweifachbetätigung erfolgen. Im vorliegenden Fall wird dieser Anforderung/Vorschrift genüge getan, indem die Betätigungselemente 26, 28, 30 derart verschaltet sind, dass die Betätigung des ersten und/oder des zweiten Betätigungselements 26, 28 eine Sperrung des dritten Betätigungselements 30 löst und dieses zur Betätigung freigibt. Wird anschließend das dritte Betätigungselement 30 betätigt liegt sicher eine Zweifachbetätigung vor und das Vakuumsystem wird so angesteuert, dass die Vakuum-Bereiche der Vakuum-Halteelemente 20 belüftet werden, was zum Lösen des plattenförmigen Werkstücks, also der Last, vom Haltekopf 12 führt.

Der Haltekopf 12 weist auf seiner Vorderseite weiterhin mehrere Relings auf, wobei je eine dieser Relings den Grundkörper 18 und die Tragarme 22 umgibt. Über diese Relings kann der Bediener/Nutzer den Haltekopf gut packen und bewegen.

Die Fig. 2 zeigt die Lagerung des Haltekopfs 12 am Arm 14 und die Anordnung 24 der Bedienelemente 26, 28, 30 des Steuerungssystems zur Steuerung des Vakuumsystems noch einmal im Detail.

Auf der dem Bediener zugewandten Vorderseite des Haltekopfes 12 ist dieser auf Höhe der Achse 16 am Ende des Arms 14 gelagert. Die Lagerung erfolgt so, dass der Haltekopf 12 bezüglich der Achse 16 drehbar (Doppelpfeil 32) und bezüglich mindestens einer weiteren Achse 36 auch verschwenkbar (Doppelpfeil 34) gelagert ist. Die beiden Achsen 16, 36 stehen dabei senkrecht auf einander. Bei einer derartigen Lagerung ist es also möglich, dass einzelne Bedienelemente, insbesondere auch Betätigungselemente 26, 28, 30 des Haltekopfes 12 bei entsprechender Winkelposition des Haltekopfes 12 von dem Arm 14 ganz oder teilweise abgedeckt werden.

Um nun ein Betätigen der Zweifachbetätigung in jeder Winkelposition des Haltekopfes 12 für den Bediener bequem zu ermöglichen, sind die Betätigungselemente 26, 28, 30 wie folgt angeordnet und ausgebildet:
Die ersten beiden der drei in der Zweifachbetätigungsschaltung zum Lösen des plattenförmigen Werkstücks verschalteten Betätigungselemente 26, 28 sind auf einander bezüglich der Position der Achse 16 gegenüberliegenden Halbebenen der Anordnung 24 angeordnet und als Druckschalter ausgebildet. Das dritte Betätigungselement 30 ist ringförmig ausgestaltet, durch Drehen entlang seiner ringförmigen Struktur betätigbar und um die Achse 16 herum angeordnet. Umfänglich auf der ringförmigen Grundstruktur des dritten Betätigungselements 30 verteilt weist dieses Griffstücke 38 auf. Die Position der Achse 16 bildet den Mittelpunkt der ringförmigen Struktur des dritten Betätigungselements 30 und die beiden ersten Betätigungselemente 26, 28 sind außerhalb des ringförmigen dritten Betätigungselements 30 derart angeordnet, dass das erste Betätigungselement 26, die Achse 16 und das zweite Betätigungselement 28 auf einer gedachten Gerade angeordnet sind, wobei beide ersten beiden Betätigungselemente 26, 28 den gleichen Abstand zur Achse 16 aufweisen.

Bei dem Haltekopf 12 sind die drei Betätigungselemente 26, 28, 30 derart verschaltet, dass die Betätigung des ersten und/oder des zweiten Betätigungselements 26, 28 eine Sperrung des dritten Betätigungselements 30 löst und dieses dritte Betätigungselement 30 zur Betätigung freigibt. Für die lösbare Sperrung des dritten Betätigungselements 30 ist eine Sperrmechanik vorgesehen, die in dieser Darstellung jedoch nicht sichtbar ist. Nun kann mit dem dritten Betätigungselement 30 ein (nicht gezeigtes) Ventil betätigt werden, über das die Vakuumbereiche der Vakuum-Halteelement 20 belüftet werden.

Die Betätigungselemente 26, 28, 30 können also wie folgt beschrieben werden:
Die Anordnung 24 der Betätigungselemente 26, 28, 30 ist symmetrisch, zentral und immer sicht- bzw. erreichbar. Dabei können die Betätigungselemente 26, 28, 30 in keiner Situation so durch den Arm 14 abgedeckt werden, dass die Zweifachbetätigung nicht möglich wäre.

### Bezugszeichen

- 10: Vakuum-Haltevorrichtung
- 12: Haltekopf
- 14: Arm
- 16: Achse
- 18: Grundkörper
- 20: Vakuum-Halteelement
- 22: Tragarm
- 24: Anordnung Bedienelemente
- 26: Betätigungselement, erstes
- 28: Betätigungselement, zweites
- 30: Betätigungselement, drittes
- 32: Doppelpfeil Drehung
- 34: Doppelpfeil Schwenken
- 36: weitere Achse
- 38: Griffstück

## Patentansprüche

1. Haltekopf (12) für eine Vakuum-Haltevorrichtung (10) zur Handhabung eines plattenförmigen Werkstücks, insbesondere einer Glasplatte, wobei der Haltekopf (12) bezüglich einer Achse (16) drehbar gelagert ist und einen Grundkörper (18) mit einer die Achse (16) umgebenden Anordnung (24) von Bedienelementen (26, 28, 30) eines Steuerungssystems zur Steuerung eines Vakuumsystems der Vakuum-Haltevorrichtung (10) sowie mindestens ein am Grundkörper (18) direkt oder indirekt gelagertes Vakuum-Halteelement (20) zum Halten des plattenförmigen Werkstücks aufweist,
**dadurch gekennzeichnet, dass** zumindest drei der Bedienelemente (26, 28, 30) als Betätigungselemente (26, 28, 30) in einer Zweifachbetätigungsschaltung zum Lösen des plattenförmigen Werkstücks verschaltet sind, wobei die ersten beiden der Betätigungselemente (26, 28) auf einander bezüglich der Position der Achse (16) gegenüberliegenden Seiten der Anordnung (24) angeordnet sind und das dritte Betätigungselement (30) ringförmig ausgestaltet ist und die Achse (16) umfänglich umgibt.

2. Haltekopf nach Anspruch 1, **dadurch gekennzeichnet, dass** die Betätigungselemente (26, 28, 30) derart verschaltet sind, dass die Betätigung des ersten und/oder des zweiten Betätigungselements (26, 28) eine Sperrung des dritten Betätigungselements (30) löst und dieses zur Betätigung freigibt.

3. Haltekopf nach Anspruch 1 oder 2, **dadurch gekennzeichnet, dass** das ringförmige dritte Betätigungselement (30) durch Drehen betätigbar ist.

4. Haltekopf nach einem der Ansprüche 1 bis 3, **dadurch gekennzeichnet, dass** das erste Betätigungselement (26), die Achse (16) und das zweite Betätigungselement (28) auf einer gedachten Gerade angeordnet sind, wobei die beiden Betätigungselemente (26, 28) insbesondere den gleichen Abstand zur Achse (16) aufweisen.

5. Haltekopf nach einem der Ansprüche 1 bis 4, **dadurch gekennzeichnet, dass** das erste und/oder das zweite Betätigungselement (26, 28) als Druckschalter, insbesondere als Drucktaster, ausgebildet ist/sind.

6. Haltekopf nach einem der Ansprüche 1 bis 5, **dadurch gekennzeichnet, dass** die ersten beiden Betätigungselemente (26, 28) außerhalb des ringförmigen dritten Betätigungselements (30) angeordnet sind.

7. Vakuum-Haltevorrichtung (10) zur Handhabung eines plattenförmigen Werkstücks, insbesondere einer Glasplatte, mit einem Vakuumsystem, einem Steuerungssystem zur Steuerung des Vakuumsystems und einem bezüglich einer Achse (16) drehbar gelagerten Haltekopf (12) nach einem der Ansprüche 1 bis 6.

8. Vakuum-Haltevorrichtung nach Anspruch 7, **gekennzeichnet durch** einen Arm (14), an dem der Haltekopf (12) drehbar gelagert ist.

9. Vakuum-Haltevorrichtung nach Anspruch 8, **dadurch gekennzeichnet, dass** der Haltekopf am Arm (14) bezüglich mindestens einer weiteren Achse (36) weiterhin auch verschwenkbar gelagert ist.

## Claims

1. Holding head (12) for a vacuum holding device (10) for handling a plate-shaped workpiece, in particular a glass plate, wherein the holding head (12) is rotatably mounted with respect to an axis (16) and comprises a base body (18) with an assembly (24) of operating elements (26, 28, 30) of a control system for controlling a vacuum system of the vacuum holding device (10) and at least one vacuum holding element (20) mounted directly or indirectly at the base body (18) for holding the plate-shaped workpiece, wherein the assembly surrounds the axis (16),
**characterized in that**
at least three of the operating elements (26, 28, 30) are connected as actuating elements (26, 28, 30) in a dual actuating circuit for releasing the plate-shaped workpiece, wherein the first two of the actuating elements (26, 28, 30) are arranged on opposite sides of the assembly (24) with respect to the position of the axis (16), and the third actuating element (30) is configured annularly and circumferentially surrounds the axis (16).

2. Holding head according to claim 1, **characterized in that** the actuating elements (26, 28, 30) are connected in such a way that the actuation of the first and/or the second actuating element (26, 28) releases a locking of the third actuating element (30) and releases the latter for actuation.

3. Holding head according to claim 1 or 2, **characterized in that** the annular third actuating element (30) can be actuated by rotating.

4. Holding head according to any one of claims 1 to 3, **characterized in that** the first actuating element (26), the axis (16) and the second actuating element (28) are arranged on an imaginary straight line, wherein the two actuating elements (26, 28) have in particular the same distance from the axis (16).

5. Holding head according to any one of claims 1 to 4, **characterized in that** the first and/or the second actuating element (26, 28) is/are designed as a push switch, in particular as a push button.

6. Holding head according to any one of claims 1 to 5, **characterized in that** the first two actuating elements (26, 28) are arranged outside the annular third actuating element (30).

7. Vacuum holding device (10) for handling a plate-shaped workpiece, in particular a glass plate, comprising a vacuum system, a control system for controlling the vacuum system and a holding head (12) rotatably mounted with respect to an axis (16) according to any one of claims 1 to 6.

8. Vacuum holding device according to claim 7, **characterized by** an arm (14) at which the holding head (12) is rotatably mounted.

9. Vacuum holding device according to claim 8, **characterized in that** the holding head is also pivotably mounted at the arm (14) with respect to at least one further axis (36).

## Revendications

1. Tête de maintien (12) pour un dispositif de maintien sous vide (10) permettant de manipuler une pièce en forme de plaque, notamment une plaque de verre, où la tête de maintien (12) est disposée rotative par rapport à un axe (16) et présente un corps de base (18) pourvu d'un ensemble (24) d'éléments de commande (26, 28, 30) entourant un axe (16) d'un système de commande permettant la commande d'un système de vide du dispositif de maintien sous vide (10) ainsi qu'au moins un élément de maintien sous vide (20) monté directement ou indirectement sur le corps de base (18) permettant le maintien de la pièce en forme de plaque,
**caractérisée en ce qu'**au moins trois des éléments de commande (26, 28, 30) sont interconnectés en tant qu'éléments d'actionnement (26, 28, 30) dans un circuit à double actionnement permettant de libérer la pièce en forme de plaque, dans laquelle les deux premiers des éléments d'actionnement (26, 28) sont associés l'un par rapport à l'autre en ce qui concerne la position de l'axe (16) de côtés opposés de l'ensemble (24) et le troisième élément d'actionnement (30) est conçu en forme d'anneau et entoure l'axe (16) sur sa périphérie.

2. Tête de maintien selon la revendication 1, **caractérisée en ce que** les éléments d'actionnement (26, 28, 30) sont interconnectés de telle manière que l'actionnement du premier, et/ou du deuxième élément d'actionnement (26, 28), dégage le verrouillage du troisième élément d'actionnement (30) et libère celui-ci pour un actionnement.

3. Tête de maintien selon la revendication 1 ou la revendication 2, **caractérisée en ce que** le troisième élément d'actionnement (30) en forme d'anneau peut être actionné par rotation.

4. Tête de maintien selon l'une des revendications 1 à 3, **caractérisée en ce que** le premier élément d'actionnement (26), l'axe (16) et le deuxième élément d'actionnement (28) sont disposés sur une ligne droite imaginaire, où les deux éléments d'actionnement (26, 28) présentent notamment la même distance par rapport à l'axe (16).

5. Tête de maintien selon l'une des revendications 1 à 4, **caractérisée en ce que** le premier, et/ou le deuxième élément d'actionnement (26, 28) est/sont conçu/s en tant que pressostat, notamment en tant que bouton poussoir.

6. Tête de maintien selon l'une des revendications 1 à 5, **caractérisée en ce que** les deux premiers éléments d'actionnement (26, 28) sont disposés en dehors du troisième élément d'actionnement (30) en forme d'anneau.

7. Dispositif de maintien sous vide (10) permettant de manipuler une pièce en forme de plaque, notamment une plaque de verre, pourvu d'un système de vide, d'un système de commande pour la commande du système de vide et d'une tête de maintien (12) rotative par rapport à un axe (16) selon l'une des revendications 1 à 6.

8. Dispositif de maintien sous vide selon la revendication 7, **caractérisé par** un bras (14) sur lequel la tête de maintien (12) est logée rotative.

9. Dispositif de maintien sous vide selon la revendication 8, **caractérisé en ce que** la tête de maintien sur le bras (14) est également logée pivotante par rapport à au moins un autre axe (36).
